# EUROPÄISCHE PATENTSCHRIFT

(11) **EP 2 869 102 B1**
(45) Veröffentlichungstag und Bekanntmachung des Hinweises auf die Patenterteilung: **19.06.2019**
(21) Anmeldenummer: 14188966.7
(22) Anmeldetag: 15.10.2014
(51) Int. Cl.: G02B 7/00, F21V 21/00, F21V 17/00

(54) **Anordnung zum Halten eines Elements zur Beeinflussung der Lichtabgabe einer Lichtquelle**
Assembly for holding an element for influencing the light emission of a light source
Agencement de retenue d'un élément destiné à influencer l'émission lumineuse d'une source lumineuse

(30) Priorität: 18.10.2013 DE 202013009268 U
(43) Veröffentlichungstag der Anmeldung: 06.05.2015
(73) Patentinhaber: Zumtobel Lighting GmbH, 32657 Lemgo (DE)
(72) Erfinder: Eidam, Michael, 31812 Bad Pyrmont (DE); Schmidt, Carsten, 32805 Bad Meinberg (DE)
(74) Vertreter: Thun, Clemens

(56) Entgegenhaltungen:
- EP-A1- 1 331 437
- EP-A2- 2 648 029
- DE-C- 525 609
- DE-C1- 19 917 137
- DE-U1- 29 601 081
- DE-U1- 29 705 097
- US-A- 2 959 882
- US-A- 4 062 140
- US-A- 4 502 760

## Beschreibung

Die vorliegende Erfindung betrifft eine Anordnung zum Halten eines folien- oder scheibenartigen Elements für die Beeinflussung der Lichtabgabe einer Lichtquelle. Insbesondere soll mit Hilfe der erfindungsgemäßen Anordnung beispielsweise ein Filter für eine Leuchte geschaffen werden.

Insbesondere bei Strahlern oder anderen Leuchten, die relativ stark gebündelt Licht abgeben, werden oftmals Filter also optische Elemente eingesetzt, um die Lichtabgabe der Leuchte in gewünschter Weise zu beeinflussen. Mit Hilfe derartiger Filter kann beispielsweise der Farbton des von dem Strahler abgegebenen Lichts modifiziert oder beispielsweise der oftmals unerwünschte Anteil an UV-Strahlung reduziert werden. Derartige Maßnahmen kommen beispielsweise häufig in Geschäften oder Museen zum Einsatz, um bestimmte Bereiche, Produkte oder Objekte durch eine entsprechende Beleuchtung besonders hervorzuheben oder ansprechender erscheinen zu lassen.

Aus dem Stand der Technik sind verschiedene Möglichkeiten bekannt, derartige Filter zu realisieren. Üblicherweise handelt es sich um scheibenartige Elemente, welche also selbst eine gewisse Stabilität aufweisen und dann im Lichtaustrittsbereich des Strahlers angeordnet werden. Alternativ zu derartigen so genannten Filtergläsern könnten auch Folien verwendet werden, die dann allerdings durch zusätzliche Maßnahmen stabilisiert werden müssen, um sinnvoll zum Einsatz kommen zu können. Hierfür ist beispielsweise bekannt, die Filterfolie zwischen zwei üblicherweise glasklare Scheiben einzulegen und die hieraus resultierende sandwichartige Anordnung dann als Filter zu verwenden.

Beispielsweise zeigt die DE 525 609 C eine Vorrichtung zum Festklemmen von Farbfiltern an Objektivfassungen, die aus zwei Trägern bestehen von denen der eine eine kreisringförmige Vertiefung zur Abstützung runder Filter besitzt, der andere mit Schieberleisten zur Führung rechteckiger Filter versehen ist, wobei ein Tragkörper mit kreisringförmiger Eindrückung und ein Träger mit rechteckiger Eindrückung mit nach innen liegenden, einander zugewandten Vertiefungen und Führungen unter gleichzeitiger Umfassung der für beide Tragkörper gemeinsam zum Andrücken des Filters oder der Linsen dienenden Federvorrichtung unter Erzeugung eines gemeinsamen Hohlraumes miteinander verbunden sind.

Weiterhin zeigen die US 4 502 760 A, DE 296 01 081 U1, EP 1 331 437 A1, DE 199 17 137 C1, DE 297 05 097 U1 und die EP 2 648 029 A2 ebenfalls Anordnungen zum Halten von Elementen zur Beeinflussung der Lichtabgabe.

Insgesamt gesehen stellen die aus dem Stand der Technik bekannten Lösungen verhältnismäßig komplexe oder großvolumige Anordnungen dar, welche auch verhältnismäßig teuer in ihrer Herstellung sind. Sollen nunmehr bei einem Strahler öfter dessen Lichtabstrahleigenschaften durch den Wechsel eines Filters verändert werden, was insbesondere in Museen oder Geschäften durchaus der Fall sein kann, so wäre es vorteilhaft, kostengünstiger herzustellende Filter verwenden zu können, welche darüber hinaus in einfacher Weise in unterschiedlichen Varianten, insbesondere mit unterschiedlichen optischen Eigenschaften realisiert werden können.

Der vorliegenden Erfindung liegt deshalb die Aufgabenstellung zugrunde, eine neuartige Möglichkeit zum Realisieren eines Filters beispielsweise für einen Strahler zur Verfügung zu stellen.

Die Aufgabe wird durch eine Anordnung zum Halten eines folien- oder scheibenartigen Elements zur Beeinflussung der Lichtabgabe einer Lichtquelle mit den Merkmalen des Anspruchs 1 gelöst.

Die erfindungsgemäße Lösung beruht auf dem Gedanken, eine rahmenartige Halterung zur Verfügung zu stellen, welche in einfacher Weise zur Halterung eines optisch wirksamen Elements genutzt werden kann. Insbesondere soll die Halterung dazu geeignet sein, Folien zuverlässig derart aufzunehmen, dass sie als optischer Filter genutzt werden können. Hierzu ist vorgesehen, die Halterung durch zwei ringartige Rahmenteile zu bilden, welche miteinander zu dem Rahmen verbunden werden können und ferner im zusammengefügten Zustand das optisch wirksame Element, also die Folie oder eine dünne Scheibe klemmend halten.

Gemäß der vorliegenden Erfindung wird dementsprechend eine Anordnung zum Halten eines folien- oder scheibenartigen Elements zur Beeinflussung der Lichtabgabe einer Lichtquelle vorgeschlagen, wobei die Anordnung durch zwei ringartige Rahmenteile gebildet ist, welche dazu ausgebildet sind, miteinander zu einem Rahmen verbunden zu werden und im zusammengefügten Zustand das folien- oder scheibenartige Element klemmend zu halten, wobei die beiden Rahmenteile das folien- oder scheibenartige Element im zusammengefügten Zustand über seinen gesamten Umfang halten, wobei die beiden Rahmenteile an ihrem der Rahmenöffnung zugewandten Bereich jeweils eine dem anderen Rahmenteil zugewandte Vorwölbung aufweisen, wobei die beiden Rahmenteile werkzeuglos miteinander verbindbar, insbesondere verrastbar sind, wobei die beiden Rahmenteile identisch ausgebildet sind.

Mit Hilfe der erfindungsgemäßen Halterung können also in einfacher Weise optische Elemente in unterschiedlichsten Varianten realisiert werden. Es ist lediglich erforderlich, eine entsprechend geeignete Folie bzw. ein scheibenartiges Element mit den gewünschten Eigenschaften zu wählen, welche dann von der erfindungsgemäßen Anordnung aufgenommen wird, so dass letztendlich dann beispielsweise ein Farbfilter oder dergleichen erhalten wird. Die Anordnung ist dabei derart, dass sowohl folienartige Elemente, also instabile Elemente, als auch scheibenartige Elemente, die selbst eine gewisse Dicke und damit Eigenstabilität aufweisen, aufgenommen werden können. Aufgrund dieser Flexibilität können also unterschiedliche Materialien mit unterschiedlichsten Eigenschaften genutzt werden, um letztendlich das optische Element zu bilden.

Insbesondere beim Einsatz von Folien ist dies von Vorteil, da hier also eine Stabilisierung des optisch wirksamen Elements über seinen gesamten Umfang hinweg erzielt wird und dementsprechend nicht die Gefahr besteht, dass während der Verwendung des optischen Elements sich die Folie beispielsweise wellt oder wölbt, was in ungewünschten lichttechnischen Effekten resultieren könnte.

Die beiden Rahmenteile können hierzu an ihrem der Rahmenöffnung zugewandten Bereich jeweils einen dem anderen Rahmenteil zugewandten leicht vorstehenden Bereich z.B. in Form einer Rippe aufweisen. Hierdurch werden die folien- oder scheibenartigen Elemente mit hoher Klemmkraft gehalten, sodass in jedem Fall die gewünschte Stabilität erzielt des optischen Elements wird.

Durch die identische Ausbildung der Rahmenteile müssen die Rahmenteile lediglich in einer einzigen Konfiguration bzw. Geometrie hergestellt werden und können dann jeweils zu Paaren miteinander verbunden werden, um die erfindungsgemäße Halterungsanordnung zu bilden. Auch diese Maßnahme wirkt sich nochmals positiv auf die Herstellungskosten aus. Vorzugsweise bestehen die beiden Rahmenteile aus Kunststoff und können dementsprechend im Spritzgussverfahren hergestellt werden. Dabei bestehen für die Form der Rahmenteile keine gravierenden Einschränkungen. Sie sind erfindungsgemäß kreisförmig ausgebildet.

Mit Hilfe der erfindungsgemäßen Halterung kann also dann in einfacher Weise ein optisches Element gebildet werden, wobei dessen optische Eigenschaften ausschließlich von den Eigenschaften des folien- oder scheibenartigen Elements abhängen. Hierbei kann es sich beispielsweise um ein Farbfilter halten. Denkbar wäre allerdings auch, Folien bzw. Scheiben zu verwenden, welche lichtstreuende oder lichtbrechende Strukturen, beispielsweise Prismenstrukturen aufweisen. Da die Außenabmessungen des optischen Elements ausschließlich von der erfindungsgemäßen Halterungsanordnung abhängen, können dann also in einfacher Weise optische Elemente mit unterschiedlichen Eigenschaften gegeneinander ausgetauscht werden und damit die Lichtabgabeeigenschaften einer Leuchte, insbesondere eines Strahlers modifiziert werden.

Nachfolgend soll die Erfindung anhand der beiliegenden Zeichnung näher erläutert werden. Es zeigen:
- Figur 1: ein optisches Element mit der erfindungsgemäßen Anordnung zur Halterung eines folien- oder scheibenartigen Elements in Explosionsdarstellung und
- Figur 2: ein Beispiel der Verwendung eines erfindungsgemäßen optischen Elements.

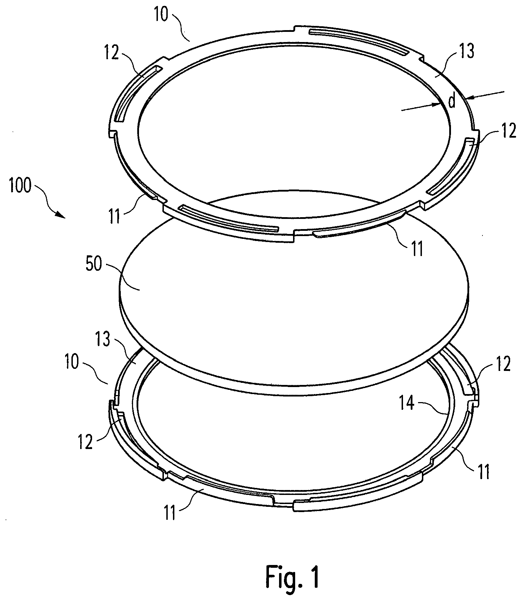

Die Ausgestaltung der erfindungsgemäßen, allgemein mit dem Bezugszeichen 100 versehenen Anordnung zur Halterung eines folien- oder scheibenartigen Elements kann insbesondere der Explosionsdarstellung von Figur 1 gut entnommen werden.

Die Anordnung 100 dient im vorliegenden Fall der Halterung einer kreisrunden Folie 50, durch die beispielsweise ein Farbfilter oder dergleichen realisiert werden soll. Wie bereits erwähnt können mit der erfindungsgemäßen Anordnung 100 auch Elemente gehalten werden, die nicht einer Beeinflussung der Farbe des Lichts dienen sondern beispielsweise die Lichtabstrahlcharakteristik entsprechend beeinflussen sollen. Denkbar wären insbesondere auch lichtstreuende Folien oder Folien mit lichtbrechenden Strukturen, insbesondere Prismenstrukturen oder dergleichen. Dabei müssen die zu haltenden optischen Elemente 50 nicht eine bestimmte, fest vorgegebene Dicke aufweisen sondern können innerhalb eines gewissen Bereichs gewählt werden, da die Anordnung 100 hier einen gewissen Spielraum bietet.

Erfindungsgemäß ist die Anordnung 100 durch zwei ringartige Rahmenteile 10 gebildet, welche zusammengefügt werden und zwischen sich dann die Folie 50 aufnehmen und halten. Ein optisches Element entsprechend der vorliegenden Erfindung wird dann also dadurch gebildet, dass eine Folie 50 bzw. Scheibe mit den gewünschten optischen Eigenschaften bereitgestellt und zwischen die beiden Rahmenteile 10 eingelegt wird. Die hierdurch gebildete Baueinheit kann dann in einfacher Weise als optisches Element verwendet werden, wie nachfolgend noch näher erläutert wird.

Das Verbinden der beiden Rahmenteile 10 erfolgt vorzugsweise werkzeuglos. Im vorliegenden Fall ist hierzu vorgesehen, dass die idealerweise aus Kunststoff hergestellten Rahmenteile 10 an ihrem Umfang alternierend ausgebildete kreisbogenabschnittartige Vorsprünge 11 sowie Ausnehmungen 12 aufweisen. Beim Zusammenfügen beider Rahmenteile 10 greifen die Vorsprünge 11 in die entsprechend gegenüberliegenden Ausnehmungen 12 des anderen Rahmenteils 10 ein, wobei das Zusammenwirken zwischen Vorsprüngen 11 und Ausnehmungen 12 vorzugweise derart ist, dass ein Verrasten erfolgt. Hierzu können beispielsweise die Vorsprünge 11 leicht nach innen weisende abgewinkelte Abschnitte aufweisen, welche dann die Ausnehmungen 12 hintergreifen, so dass letztendlich beide Rahmenteile 10 nicht mehr ohne Weiteres voneinander gelöst werden können.

Beide Rahmenteile 10 weisen einen umlaufenden Ringbereich 13 auf, der eine gewisse Dicke d aufweist und der Aufnahme des Außenumfangbereichs der Folie 50 dient. Die Folie wird also über ihren gesamten Umfang hinweg zwischen beide Rahmenteile 10 eingespannt und somit von allen Seiten her zuverlässig gehalten. Hierdurch wird verhindert, dass während der Verwendung des optischen Elements sich die Folie 50 aufgrund einseitiger Belastung wellt oder wölbt, was zu ungewünschten lichttechnischen Eigenschaften führen kann. Wie ferner insbesondere bei dem unteren Rahmenteil 10 in Figur 1 erkennbar ist, ist dabei vorzugweise am Innenumfang des Ringbereichs 13 ein leicht erhabener Bereich bzw. eine Vorwölbung 14 ausgebildet. In gleicher Weise ist die Vorwölbung 14 auch bei dem oberen Teil 10 vorgesehen, sodass hier ein besonders effizientes Verklemmen der Folie 50 zwischen beiden Rahmenteilen 10 erfolgt. Die Haltekraft der zusammengefügten Rahmenteile 10 ist also ausreichend hoch, um die Folie 50 zuverlässig zu halten.

Eine weitere Besonderheit der erfindungsgemäßen Lösung besteht ferner darin, dass die Rahmenteile 10 identisch ausgebildet sind. Tatsächlich handelt es sich also um einen einzigen Typ eines Rahmenteils 10, der mit sich selbst zu der erfindungsgemäßen Anordnung zusammengefügt werden kann. Wie Figur 1 entnehmbar ist, ist lediglich erforderlich, dass eines der beiden Rahmenteile 10 gegenüber dem anderen leicht verdreht (hier um 45°) ausgerichtet wird, da nunmehr dann ein entsprechender Vorsprung 11 auf eine entsprechende Ausnehmung 12 in dem gegenüberliegenden Rahmenteil 10 ausgerichtet ist. Die Tatsache, dass lediglich ein einziger Typ eines Rahmenteils hergestellt werden muss, führt zu einer weiteren Optimierung der Herstellungskosten, da insbesondere im Falle der Herstellung im Spritzgussverfahren lediglich ein einziges Werkzeug zur Verfügung stehen muss. Selbstverständlich wäre es allerdings auch denkbar, zwei unterschiedlich ausgestaltete Rahmenteile zu nutzen, die in entsprechender Weise miteinander verbunden werden können.

Anzumerken ist ferner, dass die erfindungsgemäße Lösung nicht auf die dargestellte Ringform beschränkt ist. In gleicher Weise könnten die Rahmenteile 10 auch rechteckig, insbesondere quadratisch, oder auch als Polygone ausgebildet sein. Auch in diesem Fall würde die Möglichkeit bestehen, die Vorsprünge 11 und Ausnehmungen 12 derart auszubilden, dass Rahmenteile eines identischen Typs mit sich selbst verrastet werden können, um die erfindungsgemäße Anordnung zu bilden.

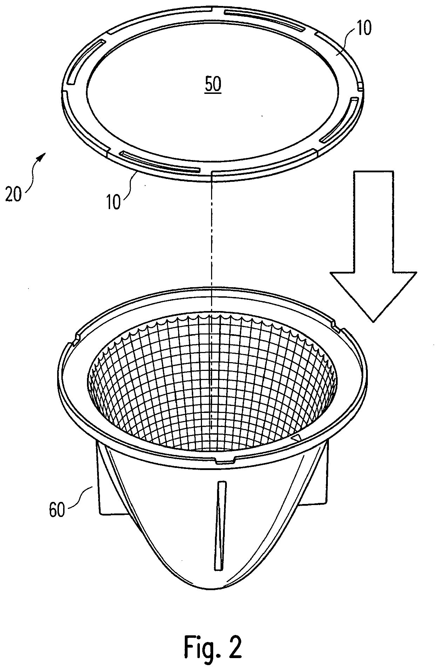

Letztendlich kann also ein optisches Element 20 gemäß der vorliegenden Erfindung in einfacher Weise dadurch erhalten werden, dass eine Folie 50 oder Scheibe zwischen beide Rahmenteile 10 eingelegt und diese dann miteinander verrastet werden. Wie in Figur 2 dargestellt ist, kann dann dieses optische Element 20 unmittelbar als Farbfilter oder dergleichen im Lichtaustrittsbereich eines Strahlers oder eines Downlights 60 angeordnet werden. Da die Außenabmessungen des optischen Elements 20 von der verwendeten Folie 50 bzw. Scheibe unabhängig sind, können dementsprechend auf Basis der erfindungsgemäßen Lösung unterschiedlichste optische Elemente in einfacher und kostengünstiger Weise gebildet werden, die dann jeweils ohne Weiteres gegeneinander ausgetauscht werden können.

## Patentansprüche

1. Anordnung (100) zum Halten eines folien- oder scheibenartigen Elements (50) zur Beeinflussung der Lichtabgabe einer Lichtquelle,
wobei die Anordnung (100) durch zwei ringartige Rahmenteile (10) gebildet ist, welche dazu ausgebildet sind, miteinander zu einem Rahmen verbunden zu werden und im zusammengefügten Zustand das folien- oder scheibenartige Element (50) klemmend zu halten,
wobei die beiden Rahmenteile (10) das folien- oder scheibenartige Element (50) im zusammengefügten Zustand über seinen gesamten Umfang halten,
wobei die beiden Rahmenteile (10) an ihrem der Rahmenöffnung zugewandten Bereich jeweils eine Vorwölbung (14) aufweisen,
wobei die beiden Rahmenteile (10) werkzeuglos miteinander verbindbar, und
wobei die beiden Rahmenteile (10) identisch ausgebildet sind,
**dadurch gekennzeichnet,**
**dass** die beiden Rahmenteile (10) im Wesentlichen kreisförmig ausgebildet sind, wobei die Vorwölbungen (14) dazu gestaltet sind, das folien- oder scheibenartige Element (50) mit Klemmkraft zu halten.

2. Anordnung nach Anspruch 1,
**dadurch gekennzeichnet,**
**dass** die beiden Rahmenteile (10) aus Kunststoff bestehen.

3. Optisches Element (20) zur Beeinflussung der Lichtabgabe einer Lichtquelle, aufweisend ein folien- oder scheibenartiges Element (50) mit optischen Eigenschaften sowie einer Anordnung (100) zur Halterung des folien- oder scheibenartiges Elements (50) gemäß einem der vorherigen Ansprüche.

4. Optisches Element nach Anspruch 3,
**dadurch gekennzeichnet,**
**dass** es sich bei dem folien- oder scheibenartiges Element (50) um ein Farbfilter handelt.

5. Optisches Element nach Anspruch 3,
**dadurch gekennzeichnet,**
**dass** es sich bei dem folien- oder scheibenartiges Element (50) um ein Element mit lichtbrechenden Strukturen, insbesondere mit Prismenstrukturen handelt.

## Claims

1. An arrangement (100) for holding a film- or disk-like element (50) for influencing the light output of a light source,
wherein the arrangement (100) is formed by two annular frame parts (10), which are designed to be connected with each other to form a frame and to hold the film- or disk-like element (50) in the assembled state in a clamping manner,
wherein the two frame parts (10) hold the film- or disk-like element (50) in the assembled state over its entire circumference,
wherein the two frame parts (10) in each case have a protrusion (14) on their region facing the frame opening,
wherein the two frame parts (10) can be connected with each other without tools, wherein the two frame parts (10) are designed identically,
**characterized in**
**that** the two frame parts (10) are designed substantially circularly shaped, wherein the protrusions (14) are designed to hold the film- or disk-like element (50) with clamping force.

2. An arrangement according to Claim 1,
**characterized in**
**that** the two frame parts (10) consist of plastic.

3. An optical element (20) for influencing the light output of a light source, having a film- or disk-like element (50) with optical properties, as well as an arrangement (100) for holding the film- or disk-like element (50) according to any one of the preceding claims.

4. An optical element according to Claim 3,
**characterized in**
**that** the film- or disk-like element (50) is a color filter.

5. An optical element according to Claim 3,
**characterized in**
**that** the film- or disk-like element (50) is an element with light-refracting structures, in particular with prismatic structures.

## Revendications

1. Ensemble (100) destiné à la retenue d'un élément (50) du type film ou disque destiné à influencer l'émission de lumière d'une source de lumière,
l'ensemble (100) étant formé par deux parties de cadre (10) de type annulaire qui sont constituées pour être raccordées l'une à autre pour former un cadre et, dans l'état assemblé, pour retenir, en exerçant un serrage, l'élément (50) du type film ou disque,
les deux parties de cadre (10) retenant, dans l'état assemblé, l'élément (50) du type film ou disque sur tout son pourtour,
les deux parties de cadre (10) comportant respectivement une protubérance (14) sur leur zone tournée vers l'ouverture de cadre,
les deux parties de cadre (10) pouvant être raccordées l'une à l'autre sans outil, et
les deux parties de cadre (10) étant constituées de façon identique,
**caractérisé en ce que**
les deux parties de cadre (10) sont constituées essentiellement de façon circulaire, les protubérances (14) étant formées pour retenir par force de serrage l'élément (50) du type film ou disque.

2. Ensemble selon la revendication 1,
**caractérisé en ce que**
les deux parties de cadre (10) sont composées de matière plastique.

3. Elément optique (20) destiné à influencer l'émission de lumière d'une source de lumière comportant un élément (50) du type film ou disque ayant des caractéristiques optiques ainsi qu'un ensemble (100) destiné à la retenue de l'élément (50) du type film ou disque selon l'une des revendications précédentes.

4. Elément optique selon la revendication 3, **caractérisé en ce que**, concernant l'élément (50) du type film ou disque, il s'agit d'un filtre de couleur.

5. Elément optique selon la revendication 3, **caractérisé en ce que**, concernant l'élément (50) du type film ou disque, il s'agit d'un élément ayant des structures réfringentes, en particulier avec des structures prismatiques.
